# EUROPÄISCHE PATENTSCHRIFT

(11) **EP 1 694 609 B1**
(45) Veröffentlichungstag und Bekanntmachung des Hinweises auf die Patenterteilung: **02.01.2008**
(21) Anmeldenummer: 04803348.4
(22) Anmeldetag: 30.11.2004
(51) Int. Cl.: C03B 19/10, C03C 1/02, C03C 3/06, C03C 4/00

(54) **VERFAHREN ZUR HERSTELLUNG VON LASERAKTIVEM QUARZGLAS UND VERWENDUNG DESSELBEN**
METHOD FOR THE PRODUCTION OF LASER-ACTIVE QUARTZ GLASS AND USE THEREOF
PROCEDE DE PRODUCTION ET UTILISATION DE VERRE DE QUARTZ LASER ACTIF

(30) Priorität: 08.12.2003 DE 10357580; 06.02.2004 DE 102004006017
(43) Veröffentlichungstag der Anmeldung: 30.08.2006
(73) Patentinhaber: Heraeus Quarzglas GmbH & Co. KG, 63450 Hanau (DE)
(72) Erfinder: KÖPPLER, Rainer, 63500 Seligenstadt (DE); KÜHN, Bodo, 63571 Gelnhausen (DE); WERDECKER, Waltraud, 63456 Hanau (DE); KIRST, Ulrich, 35116 Mainz (DE); LEHMANN, Walter, 04155 Leipzig (DE)
(74) Vertreter: Staudt, Armin Walter
(86) Internationale Anmeldenummer: PCT/EP2004/013544
(87) Internationale Veröffentlichungsnummer: WO 2005/054139

(56) Entgegenhaltungen:
- EP-A- 0 692 524
- EP-A- 1 148 035
- WO-A-01/46079
- DE-A1- 19 729 505

## Beschreibung

Die vorliegende Erfindung betrifft eine Verfahren zur Herstellung von laseraktivem Quarzglas.

Laseraktives Quarzglas wird beispielsweise eingesetzt für die Herstellung von Faserverstärkern, Faserlasern, Kantenfiltern oder Frequenzkonvertern. Gepumpte Faserlaser werden unter anderem für die Materialbearbeitung und in der Medizintechnik verwendet.

Laseraktives Quarzglas enthält Dotierstoffe, die eine Verstärkung von Laserstrahlung im Wirtsmaterial Quarzglas bewirken. Dabei handelt es sich in der Regel um Seltenerd-Kationen (Lanthaniden), aber auch um Kationen der sogenannten Übergangsmetalle. Dabei kommt es auf eine möglichst hohe Verstärkungsleistung und eine geringe Dämpfung der zu verstärkenden Laserstrahlung an.

In dem Zusammenhang stellen sich grundsätzlich die Aufgaben, eine homogene Verteilung der Dotierstoffe im Quarzglas zu gewährleisten, und eine Entglasung, wie sie insbesondere bei hohen Dotierstoffkonzentrationen auftreten kann, zu vermeiden. Bei Faserlasern für den Hochleistungsbereich, die beispielsweise unter der Bezeichnung "large mode area fiber laser" bekannt sind, liegt ein besonderes Augenmerk auch darauf, ein möglichst großes laseraktives Volumen bereit stellen zu können.

Optische Fasern werden in der Regel aus Vorformen gezogen, welche einen Kernbereich aufweisen, der aus dem laseraktiven Material besteht, und der von einem Mantelglasbereich umhüllt ist. Da die Fasern eine ausreichend niedrige Dämpfung aufweisen müssen, werden für die Herstellung der Vorformen in aller Regel CVD-Verfahren oder Sol-Gel-Verfahren eingesetzt, welche eine hohe Reinheit gewährleisten. Gegenwärtig werden Hochleistungs-Laserfasern aus Quarzglasbasis überwiegend nach dem sogenannten MCVD-Verfahren (Modified Chemical Vapor Deposition) hergestellt. Dieses Verfahren ist jedoch langwierig und kostenaufwändig und es stößt hinsichtlich der realisierbaren Faserabmessungen mittlerweile an Grenzen. Daneben lassen sich viele laseraktive Dotierstoffe über die Gasphase (durch CVD-Verfahren) nicht abscheiden. Man versucht, dieses Problem durch eine nachträgliche Dotierung zu lösen, wobei dies aber einerseits einen zusätzlichen Prozeßschritt darstellt und andererseits zu Defiziten in der Materialcharakteristik führt, die auf physikalischen Beschränkungen bei Diffusionsvorgängen beruhen, wobei im Wesentlichen Dotierstoffgradienten zu nennen sind.

Herstellungsverfahren basierend auf dem Sol-Gel-Prozess benötigen teilweise lange Prozesszeiten und führen häufig nicht zu den erforderlichen Materialqualitäten.

Mittels Schmelzverfahren ist die erforderliche hohe Reinheit in der Regel nicht zu erreichen.

In der EP 1 148 035 A ist ein Verfahren zur₋Herstellung eines Rohres aus opakem Quarzglas in einem zweistufigen Verfahren (Erschmelzen + Umformen) beschrieben. Als Ausgangsmaterial wird SiO₂-Granulat eingesetzt, das mit Aluminiumoxid dotiert sein kann. Die Atmosphäre beim Erschmelzen der Granulatkörner wird nicht näher definiert; offenbar handelt es sich um Luft, also eine oxidierend wirkende Atmosphäre. Aufgrund seiner Opazität ist das Quarzglas als laseraktives Quarzglas ungeeignet.

Auch aus der WO 01/46079 A ist die Herstellung von opakem Quarzglas aus synthetischem Granulat bekannt, das mit Aluminiumoxid dotiert sein kann. Für die Verdichtung des Granulats wird ein Sinterverfahren unter Stickstoff in Gegenwart von Kohlenstoff vorgeschlagen, also eine reduzierend wirkende Atmosphäre. Das so erhaltene, opake Quarzglas kommt als laseraktives Quarzglas nicht in Betracht.

Es ist daher Ziel der vorliegenden Erfindung, ein Verfahren zur Herstellung von laseraktivem Quarzglas hoher Qualität anzugeben, das wirtschaftlich ist, und das es ermöglicht, ein laseraktives Volumen aus dotiertem Quarzglas in nahezu beliebiger Form und Abmessung bereit zu stellen.

Diese Aufgabe wird erfindungsgemäß durch ein Verfahren gelöst, dass die folgenden Verfahrensschritte aufweist:
a) Bereitstellen einer Dispersion mit einem Feststoffgehalt von mindestens 40 Gew.-%, die in einer Flüssigkeit SiO₂-Nanopulver sowie Dotierstoffe enthält, welche mindestens ein Kation der Seltenerdmetalle oder der Übergangsmetalle umfassen,
b) Granulation durch Bewegen der Dispersion unter Entzug von Feuchtigkeit bis zur Bildung eines dotierten SiO₂-Granulats aus sphärischen, porösen Granulatkörnern mit einem Feuchtigkeitsgehalt von weniger als 35 Gew.-% und mit einer Dichte von mindestens 0,95 g/cm³,
c) Trocknen und Reinigen des SiO₂-Granulats durch Aufheizen auf eine Temperatur von mindestens 1000 °C unter Bildung einer dotierten, porösen SiO₂-Körnung mit einem OH-Gehalt von weniger als 10 ppm; und
d) Sintern oder Erschmelzen der dotierten SiO₂-Körnung in einer reduzierend wirkenden Atmosphäre unter Bildung des Rohlings aus transparentem, dotiertem Quarzglas, umfassend ein Gasdrucksintern, welches folgende Verfahrensschritte umfasst:
   aa)ein Aufheizen der SiO₂-Körnung auf eine Schmelztemperatur von mindestens 1600 °C unter Anlegen und Aufrechterhalten eines Unterdrucks,
   bb)ein Halten bei der Schmelztemperatur unter einem Überdruck im Bereich zwischen 5 bar und 15 bar während einer Schmelzdauer von mindestens 30 min unter Bildung des Quarzglas-Rohlings,
   cc) ein Abkühlen des Quarzglas-Rohlings unter Aufrechterhaltung eines Überdrucks.

Die Herstellung des Rohlings für ein Bauteil aus laseraktivem Quarzglas erfolgt erfindungsgemäß weder über ein CVD- noch ein Schmelz oder Sol-Gel-Verfahren, sondern über eine spezielle "Pulver-Route", nämlich unter Einsatz eines hochreinen, homogen dotierten SiO₂-Granulates. Es hat sich gezeigt, dass über diese "Granulat-Pulver-Route" einerseits die Anforderungen hinsichtlich der Reinheit der Ausgangsmaterialien erfüllbar sind, und dass andererseits die erforderliche homogene Verteilung des Dotierstoffes oder der Dotierstoffe in dem Quarzglas gewährleistet werden kann.

Es zeigte sich überraschenderweise, dass die nach der Granulat-Pulver-Route hergestellten Fasern wesentlich höhere Absorptionsraten und damit bessere Verstärkereigenschaften aufweisen, als die Fasern, die aus anderen Ausgangsmaterialien und nach anderen Methoden hergestellt wurden. Eine wesentliche Rolle spielt dabei anscheinend die bei der Herstellung durchlaufene "Granulat-Vorgeschichte" oder nicht sichtbare "Kornstrukturen" des Materials, die in dem Ausgangsmaterial prägend eingeschrieben zu sein scheinen, und die durch Streueffekte zu einer erheblich höheren Effizienz der Laserlicht-Verstärkung führen (dies ist in sogenannten "Faserlaser-slope-Tests" nachweisbar). Gerade diese Streueffekte, die zu einer höheren optischen Dämpfung führen, scheinen derartige Fasern für den Einsatz in der Telekommunikationstechnik zu disqualifizieren.

Erfindungsgemäß wird zunächst ein SiO₂-Granulat hergestellt, das mit dem Dotierstoff homogen dotiert ist. In der DE 197 29 505 A1 ist ein Verfahren zur Herstellung eines derartigen SiO₂-Granulats beschrieben. Eine wesentliche Modifizierung des bekannten Verfahrens zur Granulatherstellung besteht darin, dass die Dispersion erfindungsgemäß mindestens einen Dotierstoff umfassend ein Kation der Seltenerdmetalle und der Übergangsmetalle enthält, welcher die Laseraktivität des Quarzglases bewirkt. Außerdem können weitere Dotierstoffe zur Einstellung der Viskosität und des Brechungsindex des Quarzglases vorgesehen sein, wofür in erster Linie eine oder mehrere Komponenten aus der Gruppe bestehend aus Aluminium, Phosphor und Bor eingesetzt werden.

Das für die Herstellung der Dispersion eingesetzte SiO₂-Pulver liegt als sogenanntes Nano-Pulver vor. Dabei handelt es sich um Pulverteilchen mit einer Teilchengröße unterhalb von 100 nm, welche zum Beispiel durch Pyrolyse von SiO₂-Ausgangsverbindungen, durch Fällungsreaktionen oder durch Aufmahlen verglaster SiO₂-Körnung erhalten werden können. Dieses feindisperse Nanopulver ermöglicht die erforderliche homogen Verteilung der Dotierstoffe in dem Quarzglas.

Erfindungsgemäß werden die Dotierstoffe in der Dispersion homogen verteilt. Die Dotierstoffe liegen ebenfalls als feinteiliges Pulver oder in Form einer Flüssigkeit vor.

Bei der "Granulat-Pulver-Route" entsteht ein poröses Zwischenprodukt in Form von porösem SiO₂-Granulat oder poröser SiO₂-Körnung (Verfahrensschritte b) und c)). Bei der Weiterverarbeitung dieses Materials besteht die Gefahr, dass sich geschlossene, gasgefüllte Hohlräume bilden, die durch ein nachfolgendes Aufschmelzen aus dem hochviskosen Quarzglas nicht oder nur sehr langsam zu entfernen sind, und die zu Blasen im Quarzglas führen, die in einem laseraktiven Bauteil jedoch kaum tolerierbar sind.

Daher wird gemäß dem Verfahrensschritt b) die Granulation so durchgeführt, dass die sich bildenden sphärischen, porösen Granulatkörner eine Dichte von mindestens 0,95 g/cm³ aufweisen. Diese hohe Dichte geht mit einem geringen Porengehalt der Granulatkörner einher, was die Gefahr einer Blasenbildung verringert.

Die Granulation wird dadurch bewirkt, dass der Dispersion unter fortwährender Bewegung so lange Feuchtigkeit entzogen wird, bis sie eine krümelige noch poröse Masse - ein Granulat - bildet. Die Bewegung erfolgt im Allgemeinen durch Rühren, wie dies in der DE 197 29 505 A1 beschrieben ist. Wichtig ist, dass die Dispersion erst dann in eine krümelige Masse zerfällt, wenn sie einen hohen Feststoffgehalt aufweist. Die flüssige Phase der Dispersion soll daher möglichst lange aufrechterhalten werden, was bei einer thixotropen Dispersion durch eine Bewegung unter hohem Energieeintrag gewährleistet werden kann. Ein hierfür geeignetes Granulationsverfahren ist die Rollgranulation in einem Granulierteller. Aber auch andere Granulationstechniken wie Sprühgranulation, Zentrifugalzerstäubung oder Wirbelschichtgranulation lassen sich zur Granulatherstellung vorteilhaft einsetzen. Andere Granulierverfahren unter Einsatz einer Granuliermühle, durch Kompaktierung, Walzenpressen, Brikettierung oder Extrudierung sind jedoch ebenfalls nicht ausgeschlossen und können die Herstellung maßgeschneiderter dotierter Quarzglas - Bauteile unterstützen.

Wesentlich ist, dass das erhaltene SiO₂-Granulat aus porösen SiO₂-Granulatkörnern besteht, die eine sphärische Form haben, und deren Feuchtigkeitsgehalt weniger als 35 Gew.-% und deren Dichte mindestens 0,75 g/cm³ beträgt. Erst durch die hohe Dichte des SiO₂-Granulats und den hohen Feststoffgehalt kann eine geringe Schrumpfung und ein blasenfreies Einschmelzen bzw. Sintern gewährleistet werden.

Das so erhaltene, poröse Granulat wird in einem weiteren Verfahrensschritt getrocknet und gereinigt, in dem es auf eine Temperatur von mindestens 1000°C unter Bildung einer porösen SiO₂-Körnung aufgeheizt wird. Hierbei kommt es zu einer thermischen Verfestigung des Granulats unter Beibehaltung der Porosität.

Im Hinblick auf eine Blasenbildung beim anschließenden Verglasen und einer Beeinträchtigung der optischen Eigenschaften des Quarzglases durch Absorption ist es wichtig, dass die SiO₂-Körnung einen OH-Gehalt von weniger als 10 Gew.-ppm aufweist. Wegen seiner Rest - Porosität kann das SiO₂-Granulat vor, während und nach dem Verfahrensschritt c), dem Trocknen und Reinigen, zusätzlich mit Dotierstoffen versehen werden. Diese Dotierung kann über die Gasphase oder über die Flüssigphase erfolgen.

Wesentlich ist außerdem, dass die Dotierstoffe in der SiO₂-Körnung homogen verteilt vorliegen und darin fest gebunden sind. Hierzu ist es in der Regel erforderlich, solche Dotierstoffe, die bei hoher Temperatur flüchtige Verbindungen bilden, können, in feste Oxide zu überführen, was bevorzugt im Verlauf der Verfahrensschritte a) bis c) geschieht.

Die so erhaltene SiO₂-Körnung ist homogen mit dem laseraktiven Dotierstoff dotiert und wird anschließend unter Bildung des Quarzglas-Rohlings nach Verfahrensschritt d) gesintert bzw. erschmolzen. Es hat sich gezeigt, dass es gelingt, ein blasenfreies, homogen dotiertes Quarzglas zu erhalten, wenn das eingesetzte SiO₂-Granulat (und damit auch die daraus erhaltene SiO₂-Körnung) eine hohe Dichte und gleichzeitig einen geringen OH-Gehalt von weniger als 10 Gew.-ppm aufweist und wenn das Sintern oder Erschmelzen in einer reduzierend wirkenden Atmosphäre erfolgt.

Blasenreduzierend wirkt auch das in Verfahrensschritt d) genannte Merkmal, wonach das Sintern oder Erschmelzen der dotierten SiO₂-Körnung in einer reduzierend wirkenden Atmosphäre erfolgt. Die reduzierend wirkende Atmosphäre kann die Ausbildung von sauerstoffhaltigen Gasblasen im Quarzglas des SiO₂-Rohlings vermindern oder die Bildung von Blasen mit Sauerstoff enthaltender Gasfüllung vermeiden. Eine reduzierend wirkende Atmosphäre ergibt sich beispielsweise durch Einsatz von Tiegel- oder Ofenteilen aus Grafit oder Kohlenstoff.

Erfindungsgemäß umfasst das Sintern oder Schmelzen der SiO₂-Körnung nach Verfahrensschritt d) ein Gasdrucksintern. Beim Gasdrucksintern wird die zu sinternde SiO₂-Körnung unter erhöhtem Druck erhitzt und dabei erschmolzen. Der Überdruck reduziert die Blasenbildung.

Das Gasdrucksintern umfasst die oben genannten Verfahrensschritte aa), bb) und cc), wodurch es gelingt, insbesondere auch große Formteile in optisch einwandfreier Qualität herzustellen. Durch das Aufrechterhalten eines Überdrucks während des Abkühlens wird eine Ausbildung und das Wachstum von Blasen im noch erweichten Quarzglas vermieden.

Das erfindungsgemäße Verfahren stellt ein flexibles und wirtschaftliches Herstellungsverfahren dar, das aufgrund der "Granulat-Pulver-Route" modular anhand der Verfahrensschritte a) bis d) eine maßgeschneiderte Produkt-Prozessierung gewährleistet, wobei unterschiedlichste Dotierstoffkonzentrationen erhalten werden können.

Im Hinblick auf eine hohe Dichte des SiO₂-Granulats und einer damit einhergehenden homogenen Dotierstoffverteilung und einer geringen Blasendichte des herzustellenden Quarzglases wird eine Verfahrensweise bevorzugt, bei der in der Dispersion ein anfänglicher Feststoffgehalt von mindestens 50 Gew.-%, vorzugsweise mindestens 60 Gew.-%, eingestellt wird.

Für eine geringe Blasendichte ist es auch vorteilhaft, wenn das nach Verfahrensschritt b) erhaltene SiO₂-Granulat eine BET-Oberfläche im Bereich zwischen 40 m²/g bis 70 m²/g aufweist. Vorzugsweise liegt die BET-Oberfläche nach Verfahrensschritt b) bei dem SiO₂-Granulat bei mindestens 50 m²/g. Hierdurch wird beim Sintern bzw. Schmelzen des SiO₂-Granulats eine geringe Blasenbildung erreicht.

Im Hinblick auf ein günstiges Sinter- bzw. Schmelzverfahren hat es sich als vorteilhaft erwiesen, wenn die sphärischen, porösen Granulatkörner eine Korngröße von weniger als 500 µm aufweisen.

Ein besonders effektives und rasches Trocknen der porösen SiO₂-Granulatkörner wird erreicht, wenn das SiO₂-Granulat in chlorhaltiger Atmosphäre getrocknet und gereinigt wird. Dabei hat es sich besonders bewährt, wenn das SiO₂-Granulat bei einer Temperatur von mindestens 950 °C getrocknet und gereinigt wird.

Vorteilhafterweise erfolgt das Trocknen und Reinigen des porösen Granulats unter sauerstoffhaltiger Atmosphäre. Dadurch wird eine Fixierung solcher Dotierstoffe bewirkt, welche beim Aufheizen auf höhere Temperaturen flüchtige Verbindungen bilden können.

Es hat sich weiterhin als vorteilhaft erwiesen, wenn die nach Verfahrensschritt c) erhaltene poröse SiO₂-Körnung einen OH-Gehalt von weniger als 1 Gew.-ppm aufweist.

Der geringe OH-Gehalt wirkt sich vorteilhaft sowohl auf die Blasenbildung als auch auf die optische Dämpfung des Quarzglases bei den durch die OH-Absorption beeinflussten Lichtwellenlängen aus.

Im Hinblick auf eine geringe Blasenbildung hat es sich auch als günstig erwiesen, wenn die nach Verfahrensschritt c) erhaltene poröse SiO₂-Körnung eine BET-Oberfläche von weniger als 20 m²/g aufweist.

Besonders bewährt hat sich eine Verfahrensmodifikation, bei der die SiO₂-Körnung vor dem Verfahrensschritt d) thermisch verdichtet wird. Auch die Vorverdichtung der SiO₂-Körnung trägt zu einer Verminderung der Blasenbildung während der Schmelz- bzw. Sinterphase bei.

Es hat sich bewährt, wenn der Quarzglas-Rohling bei einer Temperatur von mindestens 1120 °C während einer Haltezeit von mindestens 40 h getempert wird. Hierdurch werden thermische Spannungen, welche eine Doppelbrechung bewirken, abgebaut.

Bei einer besonders bevorzugten Verfahrensvariante wird die SiO₂-Körnung nach Verfahrensschritt d) in einer Form erschmolzen. Infolge der hohen Dichte der SiO₂-Körnung und der damit einhergehenden geringen Schrumpfung des daraus gesinterten Formkörpers weist dieser im wesentlichen die durch die Form vorgegebenen Abmessungen auf. Nachbearbeitungen können somit vermeiden und Materialverluste reduziert werden, was die Wirtschaftlichkeit des Verfahrens weiter verbessert.

Der SiO₂-Rohling nach Verfahrensschritt d) wird vorzugsweise dreidimensional homogenisiert. Die Homogenisierung erfolgt durch Durchmischen des SiO₂-Rohlings in mehreren Richtungen.

Dadurch wird Schlierenfreiheit und eine in drei Dimensionen homogene Verteilung der Brechzahl erreicht.

Alternativ hierzu hat es sich auch als günstig erwiesen, aus SiO₂-Körnung unterschiedlicher Brechzahl einen Schüttkörper mit einer radial inhomogenen Brechzahlverteilung auszubilden, und diesen Schüttkörper zu dem SiO₂-Rohling zu sintern oder zu erschmelzen.

Durch eine entsprechende Anordnung von SiO₂-Körnungen unterschiedlicher Brechzahl in einem Schüttkörper lassen sich beliebige Brechzahlverteilungen im gesinterten Quarzglas-Rohling realisieren. Es sind damit auch harmonische Übergänge mit angepassten mechanischen Eigenschaften, z.B. thermische Ausdehnungskoeffizienten, realisierbar

Das erfindungsgemäße Verfahren ist besonders geeignet zur Herstellung von SiO₂-Rohlingen, welche als Kernmaterial für Faserlaser, als optischer Filter oder als Umhüllungsrohre für Laser Verwendung finden. Derartige Umhüllungsrohre für Laser werden als Kühlrohre zur Einleitung einer Kühlflüssigkeit eingesetzt. Bei den Faserlasern handelt es sich um seitlich gepumpte bzw. um endgepumpte Faserlaser.

Nachfolgend wird die Erfindung anhand von Ausführungsbeispielen näher erläutert:

### 1. Beispiel: Yb-dotiertes Quarzglas

Es wird ein Stab mit einem Durchmesser von 6 mm aus laseraktivem Quarzglas hergestellt, das mit 0,7 mol-% Yb₂O₃ und mit 5,0 mol-% Al₂O₃ dotiert ist.

Hierzu wird aus Wasser und aus amorphen, nanoskaligen, durch Flammenhydrolyse von SiCI₄ erzeugten, pyrogenen SiO₂-Partikeln, die eine spezifische Oberfläche (nach BET) von 50 m²/g aufweisen eine wässrige Dispersion hergestellt und homogenisiert. In die homogene Dispersion werden als Ausgangskomponenten für die Dotanden in Wasser lösliche Hydratverbindungen eingesetzt. In 1500 g Wasser werden 1000 g SiO₂ und Dotanden in folgenden Mengen eingerührt:

| | |
|---|---|
| YbCl₃×6H₂O: | 87g |
| AlCl₃×6H₂O: | 387g |

Die Herstellung des Granulats erfolgt mittels eines üblichen Naßgranulierverfahrens unter Einsatz eines Eirich-Mischers. Hierzu wird der Dispersion durch Überleiten von erwärmter Luft und unter fortwährendem Rühren Feuchtigkeit entzogen, bis diese unter Bildung einer krümeligen Masse aus sphärischen, porösen, homogen dotierten SiO₂-Granulatkörnern zerfällt.

Die SiO₂-Granulatkörner zeichnen sich durch einen geringen Feuchtigkeitsgehalt von 28 Gew.-% und durch eine Dichte von 0,75 g/cm³ aus.

Sie werden anschließend durch Erhitzen in einem Durchlaufofen bei einer Temperatur von ca. 1100°C in chlorhaltiger Atmosphäre gereinigt und getrocknet und gleichzeitig thermisch leicht vorverdichtet. Die Reinigung mittels Chlor ist dabei besonders effektiv, da die Oberfläche der SiO₂-Partikel über die Porenkanäle für das Reinigungsgas zugänglich ist und die gasförmigen Verunreinigungen leicht entfernt werden können.

Die nach dieser Vorbehandlung erhaltene SiO₂-Körnung zeichnet sich durch einen OH-Gehalt von weniger als 1 Gew.-ppm, eine spezifische BET-Oberfläche von 34 m²/g und durch eine Stampfdichte von 0,95 g/cm³ aus. Der mittlere Korndurchmesser liegt bei etwa 420 µm, wobei die Fraktion mit Korngrößen oberhalb von 500 µm vor dem Sintern entfernt wird. Der Gesamtgehalt der Verunreinigungen an Li, Na, K, Mg, Ca, Fe, Cu, und Mn beträgt weniger als 200 Gew.-ppb.

Die so hergestellte dotierte, poröse SiO₂-Körnung aus amorphen, nanoskaligen SiO₂-Partikeln wird anschließend in eine Grafitform gegeben und bei einer Temperatur von 1600 °C durch Gasdrucksintern verglast. Hierbei wird die Form zunächst unter Aufrechterhaltung eines Unterdrucks von auf die Sintertemperatur von 1600 °C aufgeheizt. Nach Erreichen der Sintertemperatur wird im Ofen ein Überdruck von 5 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrecht erhalten.

Das so erhaltene Yb-dotierte Quarzglasblock ist transparent und von ausgezeichneter optischer Qualität. Das Quarzglas ist als Kernglas für einen optisch gepumpten Faserlaser geeignet. Kernstäbe bis zu einem Durchmesser von 15 mm können aus dem Blockmaterial durch Kernbohren entnommen werden. Die so erzeugten Hohlzylinder finden als laseraktive Kühlrohre bei Lasern Verwendung.

### 2. Beispiel: Nd-dotiertes Quarzglas

Es wird ein Stab mit einem Durchmesser von 10 mm und einer Länge von 1 m aus laseraktivem Quarzglas hergestellt, das mit 1300 ppm Nd₂O₃, und 0,5 mol % Al₂O₃, dotiert ist.

Hierzu wird aus Wasser und aus amorphen, nanoskaligen, durch eine Sol-Gel-Fällungsreaktion erzeugten SiO₂-Partikeln, die eine spezifische Oberfläche (nach BET) von 50 m²/g aufweisen eine wässrige Dispersion mit einem anfänglichen Feststoffgehalt von 50 Gew.-% hergestellt und homogenisiert. In die homogene Dispersion werden als Ausgangskomponenten für die Dotanden in Wasser lösliche Hydratverbindungen eingesetzt. Pro kg SiO₂ werden 40,0g AlCl₃ × 6H₂O und 2,8g NdCl₃× 6H₂O in die Dispersion eingerührt.

Die Herstellung des Granulats erfolgt wie anhand Beispiel 1 beschrieben. Es stellen sich infolgedessen auch die gleichen Eigenschaften der so erhaltenen SiO₂-Granulatkörner ein.

Das dotierte Granulat wird anschließend durch Erhitzen in einem Durchlaufofen bei einer Temperatur von ca. 1250 °C in chlor- und sauerstoffhaltiger Atmosphäre gereinigt und getrocknet und gleichzeitig thermisch leicht vorverdichtet. Die nach dieser Vorbehandlung erhaltene SiO₂-Körnung zeichnet sich durch einen OH-Gehalt von weniger als 1 Gew.-ppm, und durch eine spezifische BET-Oberfläche von 18 m²/g aus.

Die Kornfraktion mit Korngrößen oberhalb von 500 µm wird entfernt, und die verbleibende Körnung wird durch kurzes Erhitzen auf eine Temperatur um 1450 °C dichtgesintert. Die auf diese Weise erhaltene dichte SiO₂-Körnung zeichnet sich durch einen OH-Gehalt von weniger als 1 Gew.-ppm aus. Der Gesamtgehalt der Verunreinigungen an Li, Na, K, Mg, Ca, Fe, Cu, und Mn beträgt weniger als 200 Gew.-ppb.

Die so hergestellte dotierte, poröse SiO₂-Körnung wird anschließend in eine Grafitform gegeben und bei einer Temperatur von 1600 °C durch Gasdrucksintern verglast, wie dies oben anhand Beispiel 1 beschrieben ist.

Das so erhaltene Nd-dotierte Quarzglasblock ist transparent und von ausgezeichneter optischer Qualität und ist für einen Einsatz als Kernmaterial für einen Faserlaser oder als optischer Filter geeignet. Durch Kernbohren werden aus dem Blockmaterial Rohre hergestellt, die als laseraktive Kühlrohre bei Lasern Verwendung finden.

## Patentansprüche

1. Verfahren zur Herstellung eines Rohlings für ein Bauteil aus laseraktivem Quarzglas, umfassend die folgenden Verfahrensschritte:
a) Bereitstellen einer Dispersion mit einem Feststoffgehalt von mindestens 40 Gew.-%, die in einer Flüssigkeit SiO₂-Nanopulver sowie Dotierstoffe enthält, welche mindestens ein Kation der Seltenerdmetalle oder der Übergangsmetalle umfassen,
b) Granulation durch Bewegen der Dispersion unter Entzug von Feuchtigkeit bis zur Bildung eines dotierten SiO₂-Granulats aus sphärischen, porösen Granulatkörnern mit einem Feuchtigkeitsgehalt von weniger als 35 Gew.-% und mit einer Dichte von mindestens 0,95 g/cm³,
c) Trocknen und Reinigen des SiO₂-Granulats durch Aufheizen auf eine Temperatur von mindestens 1000 °C unter Bildung einer dotierten, porösen SiO₂-Körnung mit einem OH-Gehalt von weniger als 10 ppm; und
d) Sintern oder Erschmelzen der dotierten SiO₂-Körnung in einer reduzierend wirkenden Atmosphäre unter Bildung des Rohlings aus transparentem, dotiertem Quarzglas, umfassend ein Gasdrucksintern, welches folgende Verfahrensschritte umfasst:
aa)ein Aufheizen der SiO₂-Körnung auf eine Schmelztemperatur von mindestens 1600 °C unter Anlegen und Aufrechterhalten eines Unterdrucks,
bb)ein Halten bei der Schmelztemperatur unter einem Überdruck im Bereich zwischen 5 bar und 15 bar während einer Schmelzdauer von mindestens 30 min unter Bildung des Quarzglas-Rohlings,
cc) ein Abkühlen des Quarzglas-Rohlings unter Aufrechterhaltung eines Überdrucks.

2. Verfahren nach Anspruch 1, **dadurch gekennzeichnet, dass** in der Dispersion ein anfänglicher Feststoffgehalt der von mindestens 50 Gew-% eingestellt wird.

3. Verfahren nach einem der vorhergehenden Ansprüche, **dadurch gekennzeichnet, dass** das nach Verfahrensschritt b) erhaltene SiO₂-Granulat eine BET-Oberfläche im Bereich zwischen 40 m²/g bis 70 m²/g aufweist.

4. Verfahren nach Anspruch 3, **dadurch gekennzeichnet, dass** das nach Verfahrensschritt b) erhaltene SiO₂-Granulat eine BET-Oberfläche von mindestens 50 m²/g aufweist.

5. Verfahren nach einem der vorhergehenden Ansprüche, **dadurch gekennzeichnet, dass** die sphärischen, porösen Granulatkörner eine Korngröße von weniger als 500 µm aufweisen.

6. Verfahren nach einem der vorhergehenden Ansprüche, **dadurch gekennzeichnet, dass** das SiO₂-Granulat in chlorhaltiger Atmosphäre getrocknet und gereinigt wird.

7. Verfahren nach einem der vorhergehenden Ansprüche, **dadurch gekennzeichnet, dass** das SiO₂-Granulat bei einer Temperatur von mindestens 1050 °C getrocknet und gereinigt wird.

8. Verfahren nach einem der vorhergehenden Ansprüche, **dadurch gekennzeichnet, dass** das Trocknen und Reinigen des porösen Granulats unter sauerstoffhaltiger Atmosphäre erfolgt.

9. Verfahren nach einem der vorhergehenden Ansprüche, **dadurch gekennzeichnet, dass** die nach Verfahrensschritt c) erhaltene poröse SiO₂-Körnung einen OH-Gehalt von weniger als ein Gew.-ppm aufweist.

10. Verfahren nach einem der vorhergehenden Ansprüche, **dadurch gekennzeichnet, dass** die nach Verfahrensschritt c) erhaltene poröse SiO₂-Körnung einen eine BET-Oberfläche von weniger als 20 m²/g aufweist.

11. Verfahren nach einem der vorhergehenden Ansprüche, **dadurch gekennzeichnet, dass** die SiO₂-Körung vor dem Verfahrensschritt d) thermisch verdichtet wird.

12. Verfahren nach einem der vorhergehenden Ansprüche, **dadurch gekennzeichnet, dass** der Quarzglas-Rohling bei einer Temperatur von mindestens 1120 °C während einer Haltezeit von mindestens 40 h getempert wird.

13. Verfahren nach einem der vorhergehenden Ansprüche, **dadurch gekennzeichnet, dass** die SiO₂-Körnung nach Verfahrensschritt d) in einer Form erschmolzen wird.

14. Verfahren nach einem der vorhergehenden Ansprüche, **dadurch gekennzeichnet, dass** der SiO₂-Rohling nach Verfahrensschritt d) dreidimensional homogenisiert wird.

15. Verfahren nach einem der vorhergehenden Ansprüche, **dadurch gekennzeichnet, dass** SiO₂-Körnung unterschiedlicher Brechzahl ein Schüttkörper mit einer radial inhomogenen Brechzahlverteilung gebildet wird, und dass der Schüttkörper zu dem SiO₂-Rohling gesintert oder erschmolzen wird.

16. Verwendung eines nach einem Verfahren gemäß den Ansprüchen 1 bis 15 erhalten SiO₂-Rohlings als Kernmaterial für einen Faserlaser, als optischer Filter oder als Umhüllungsrohr für Laser.

## Claims

1. A method for producing a blank for a component of laser active quartz glass, comprising the following steps:
a) providing a dispersion with a solids content of at least 40% by wt. which contains SiO₂ nanopowder and dopants, including a cation of the rare earth metals or of the transition metals in a liquid,
b) granulation by moving the dispersion with withdrawal of moisture until the formation of a doped SiO₂ granulate of spherical porous granulate grains having a moisture content of less than 35% by wt. and a density of at least 0.95 g/cm³,
c) drying and purifying the SiO₂ granulate by heating to a temperature of at least 1000°C with formation of doped porous SiO₂ granules having an OH content of less than 10 ppm, and
d) sintering or melting the doped SiO₂ granules in a reducing atmosphere withformation of the blank of doped quartz glass, including a gas pressure sintering, which comprises the following steps:
aa) heating the SiO₂ granules to a melting temperature of at least 1600°C while applying and maintaining a negative pressure;
bb) holding at the melting temperature at an overpressure ranging from 5 bar to 15 bar for a melting period of at least 30 min with formation of the quartz glass blank;
cc) cooling the quartz glass blank while maintaining an overpressure.

2. The method according to claim 1, **characterized in that** an initial solids content of at least 50% by wt. is set in the dispersion.

3. The method according to any one of the preceding claims, **characterized in that** the SiO₂ granulate obtained according to step b) has a BET surface area ranging from 40 m²/g to 70 m²/g.

4. The method according to claim 3, **characterized in that** the SiO₂ granulate obtained according to step b) has a BET surface area of at least 50 m²/g.

5. The method according to any one of the preceding claims, **characterized in that** the spherical porous granulate grains have a grain size of less than 500 µm.

6. The method according to any one of the preceding claims, **characterized in that** the SiO₂ granulate is dried and purified under a chlorine-containing atmosphere.

7. The method according to any one of the preceding claims, **characterized in that** the SiO₂ granulate is dried and purified at a temperature of at least 1050°C.

8. The method according to any one of the preceding claims, **characterized in that** drying and purifying of the porous granulate is performed under an oxygen-containing atmosphere.

9. The method according to any one of the preceding claims, **characterized in that** the porous SiO₂ granules obtained according to step c) have an OH content of less than one wt ppm.

10. The method according to any one of the preceding claims, **characterized in that** the porous SiO₂ granules obtained according to step c) have a BET surface area of less than 20 m²/g.

11. The method according to any one of the preceding claims, **characterized in that** the SiO₂ granules are thermally densified prior to step d).

12. The method according to any one of the preceding claims, **characterized in that** the quartz glass blank is annealed at a temperature of at least 1120°C for a retention period of at least 40 h.

13. The method according to any one of the preceding claims, **characterized in that** the SiO₂ granules according to step d) are molten in a mold.

14. The method according to any one of the preceding claims, **characterized in that** the SiO₂ blank according to step d) is three-dimensionally homogenized.

15. The method according to any one of the preceding claims, **characterized in that** a bulk body with a radially inhomogeneous refractive index distribution is formed from SiO₂ granules of different refractive index, and that the bulk body is sintered or molten to obtain the SiO₂ blank.

16. Use of an SiO₂ blank obtained according to a method as claimed in claims 1 to 15, as a core material for a fiber laser, as an optical filter or as a cladding tube for laser.

## Revendications

1. Procédé pour la fabrication d'une ébauche pour un composant en verre de quartz à action laser, comprenant les étapes suivantes de procédé :
a) préparation d'une dispersion avec une teneur en substance solide d'au moins 40 pour cent en poids qui contient dans un liquide de la nanopoudre SiO₂ ainsi que des substances dopantes, qui comprennent au moins un cation des métaux de terre rare ou des métaux de transition,
b) granulation par déplacement de la dispersion par extraction de l'humidité jusqu'à formation d'un granulé dopé SiO₂ composé de grains sphériques poreux avec une teneur en humidité inférieure à 35 pour cent en poids et une densité d'au moins 0,95 g/cm³,
c) séchage et purification du granulé SiO₂ par chauffage à une température d'au moins 1000°C en formant un granulé SiO₂ poreux dopé avec une teneur en OH inférieure à 10 ppm, et
d) frittage ou fusion du granulé SiO₂ dopé dans une atmosphère réductrice en formant une ébauche en verre de quartz transparent dopé, comprenant un frittage sous pression gazeuse qui comprend les étapes suivantes de procédé :
aa) un chauffage du granulé SiO₂ à une température de fusion d'au moins 1600°C par application et maintien d'une dépression,
bb) maintien à la température de fusion sous une surpression comprise entre 5 bars et 15 bars pendant une durée de fusion d'au moins 30 min en formant l'ébauche de verre de quartz,
cc) refroidissement de l'ébauche de verre de quartz par maintien d'une surpression.

2. Procédé selon la revendication 1, **caractérisé en ce que** une teneur en substance solide initiale d'au moins 50 pour cent en poids est réglée dans la dispersion.

3. Procédé selon l'une des revendications précédentes, **caractérisé en ce que** le granulé SiO₂ obtenu après l'étape de procédé b) présente une surface BET comprise entre 40 m²/g et 70 m²/g.

4. Procédé selon la revendication 3, **caractérisé en ce que** le granulé SiO₂ obtenu après l'étape de procédé b) présente une surface BET d'au moins 50 m²/g.

5. Procédé selon l'une des revendications précédentes, **caractérisé en ce que** les grains poreux, sphériques présentent une taille de grains inférieure à 500 µm.

6. Procédé selon l'une des revendications précédentes, **caractérisé en ce que** le granulé SiO₂ est séché et purifié dans une atmosphère contenant du chlore.

7. Procédé selon l'une des revendications précédentes, **caractérisé en ce que** le granulé SiO₂ est séché et purifié à une température d'au moins 1050°C.

8. Procédé selon l'une des revendications précédentes, **caractérisé en ce que** le séchage et la purification du granulé poreux s'effectuent sous une atmosphère contenant de l'oxygène.

9. Procédé selon l'une des revendications précédentes, **caractérisé en ce que** le granulé SiO₂ obtenu après l'étape de procédé c) présente une teneur en OH inférieure à un ppm en poids.

10. Procédé selon l'une des revendications précédentes, **caractérisé en ce que** le granulé SiO₂ obtenu après l'étape de procédé c) présente une surface BET inférieure à 20 m²/g.

11. Procédé selon l'une des revendications précédentes, **caractérisé en ce que** le granulé de SiO₂ est densifié thermiquement avant l'étape de procédé d).

12. Procédé selon l'une des revendications précédentes, **caractérisé en ce que** l'ébauche de verre de quartz est tempérée à une température d'au moins 1120°C pendant un temps de maintien d'au moins 40 heures.

13. Procédé selon l'une des revendications précédentes, **caractérisé en ce que** le granulé de SiO₂ est fondu dans un moule après l'étape de procédé d).

14. Procédé selon l'une des revendications précédentes, **caractérisé en ce que** l'ébauche de SiO₂ est homogénéisée tridimensionnellement après l'étape de procédé d).

15. Procédé selon l'une des revendications précédentes, **caractérisé en ce que** le granulé de SiO₂ d'indice de réfraction différent forme un corps en vrac avec une répartition radiale inhomogène d'indice de réfraction et **en ce que** le corps en vrac est fritté ou fondu en une ébauche SiO₂.

16. Utilisation d'une ébauche SiO₂ obtenue selon un procédé conforme aux revendications 1 à 15, en tant que matériau coeur pour un laser à fibres, en tant que filtre optique ou en tant que tube gainant pour laser.
